(19) Europäisches Patentamt
European Patent Office
Office européen des brevets

(11) **EP 4 803 307 A1**

(12) **EUROPEAN PATENT APPLICATION**

(43) Date of publication:
**09.09.2026 Bulletin 2026/37**

(21) Application number: **26174088.0**

(22) Date of filing: **12.01.2022**

(51) International Patent Classification (IPC):
***B32B 27/20*** *(2006.01)* ***C09C 1/62*** *(2006.01)*
***C09C 3/00*** *(2006.01)* ***C09C 3/06*** *(2006.01)*
***C09C 3/08*** *(2006.01)* ***C09C 3/10*** *(2006.01)*
***C09C 3/12*** *(2006.01)* ***C09D 5/00*** *(2006.01)*
***C09D 201/00*** *(2006.01)* ***C09D 11/00*** *(2014.01)*
***C09D 7/62*** *(2018.01)* ***C09C 1/64*** *(2006.01)*
***C09D 7/40*** *(2018.01)* ***C09D 11/037*** *(2014.01)*

(52) Cooperative Patent Classification (CPC):
**C09D 11/037; C09C 1/62; C09C 1/642; C09C 1/648; C09C 3/12; C09D 5/00; C09D 7/62; C09D 7/66; C09D 7/70;** C01P 2002/85; C01P 2004/24; C01P 2004/54; C01P 2004/61; C01P 2004/62

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.01.2021 JP 2021003098**
**02.03.2021 JP 2021032830**
**23.03.2021 JP 2021048562**
**05.07.2021 JP 2021111401**

(62) Document number(s) of the earlier application(s) in accordance with Art. 76 EPC:
**22739407.9 / 4 279 267**

(71) Applicant: **ASAHI KASEI KABUSHIKI KAISHA**
**Tokyo 100-0006 (JP)**

(72) Inventors:
- **FUJIMOTO, Katsuhiro**
**Tokyo, 1000006 (JP)**
- **SUGIMOTO, Atsutoshi**
**Tokyo, 1000006 (JP)**
- **ORIKASA, Tomoaki**
**Tokyo, 1000006 (JP)**

(74) Representative: **Strehl & Partner mbB**
**Maximilianstrasse 54**
**80538 München (DE)**

Remarks:
This application was filed on 22.04.2026 as a divisional application to the application mentioned under INID code 62.

(54) **METAL PIGMENT, APPLICATION OF METAL PIGMENT, AND METHOD FOR MANUFACTURING METAL PIGMENT**

(57) The present invention relates to a method for manufacturing a metal pigment, using a stirring vessel-type reaction apparatus and comprising dispersing metal particles in a solvent, coating the metal particles with a silicon compound, and filtering and washing the metal particles, wherein the stirring vessel-type reaction apparatus has a reactor having a volume of 100 L or more, and the ratio of the maximum diameter of a stirring blade to the diameter of the reactor is in a range of 0.2 to 1.0, and the shortest distance between an inner surface of the reactor and a tip of the stirring blade is 10 mm or more; wherein the tip speed of the stirring blade, while being stirred, is 1 to 20 m/s. The present invention also relates to a stirring vessel-type reaction apparatus used in the manufacturing method. The method of the present invention can provide metal pigment comprising composite particles having a reduced flocculation property of individual particles and having excellent hiding power and color tone.

EP 4 803 307 A1

## Description

TECHNICAL FIELD

The present application relates to a method for manufacturing a metal pigment. More specifically, the present application relates to a method for manufacturing a metal pigment comprising composite particles having a reduced flocculation property of individual particles and having excellent hiding power, color tone, and the like.

BACKGROUND ART

Conventionally, metal pigments have been used for metallic coating materials, printing inks, plastic kneading, and the like for the purpose of obtaining a decorative effect focusing on a metallic feeling.

In the field of coating materials, there has recently been an increasing need for conversion to aqueous coating materials with small use amounts of organic solvents in order to save resources and eliminate pollution, but in metallic coating materials containing metal pigments, the types of aqueous coating materials that can be practically used are not sufficient yet. This is because a metal pigment is easily corroded in an aqueous coating material. When metal powder is present in an aqueous coating material, corrosion by water occurs in any one of acidic, neutral, and basic regions or a plurality of regions on the basis of the properties of various metals, and hydrogen gas is generated. From the viewpoint of safety, this is a very serious problem in the process of manufacturing coating materials or inks in coating material manufacturers or ink manufacturers, and in the coating process or printing process in automobiles, home appliance manufacturers, printing manufacturers, or the like. In addition, the smoothness of a metal surface is lost due to corrosion, and thus a decrease in color tone cannot be avoided. The corrosion resistance of a metal pigment in water, an aqueous coating material, or an aqueous ink can be paraphrased as "storage stability".

Patent Literature 1 (JP-A-2003-147226) discloses an aluminum pigment having an inorganic molybdenum coating film and further having a coating film made of amorphous silica that coats the coating film. Patent Literature 2 (WO 2004/096921 A) discloses an aluminum pigment having an inorganic molybdenum coating film and further having a coating film made of amorphous silica that coats the coating film and/or a coating film formed from a silane coupling agent.

In any of the methods described in these patent literatures (a method for manufacturing an aluminum pigment, etc.), however, a decrease in the color tone of the metal pigment cannot be avoided, and the process is complicated.

Patent Literature 3 (WO 2018/180936 A) discloses a coating pigment of composite particles containing metal particles and a coating layer, which is a silicon-containing compound layer, and having a small proportion of aggregates constituted by at least four particles, for the purpose of providing a coating pigment (metal pigment composition) in which a relatively small amount of flocculated bodies is dispersed.

In Patent Literature 3, however, it is not possible to find a specific teaching as to how to obtain a desired coating pigment having a small amount of flocculated bodies, other than that it is preferable to adjust a stirring Reynolds number to a predetermined range. It is also known that, only by satisfying the ranges of the characteristic parameters defined in Patent Literature 3, it is difficult to obtain sufficiently satisfactory storage stability, a reduced flocculation property, hiding power, and color tone.

In addition, in order to improve the stability of a metal pigment in an aqueous coating material, a pigment using composite particles, in which metal particles are coated with metal oxide such as amorphous silica, has been proposed. Many of the pigment particles coated with amorphous silica or the like exist as flocculated bodies, and as a result, hiding power per unit mass may be decreased or brightness may be deteriorated, so that a means for suppressing flocculation has been required.

For example, Patent Literature 4 proposes a technique in which the number proportion of aggregates constituted by at least four composite particles, can be as small as 35% or less. In this technique, however, particles, in which two or three composite particles are flocculated, are acceptable, and in order to realize a metallic coating film having high gloss or the like, a technique for more effectively suppressing flocculation has been required.

In addition, these flocculated particles can have a substantial particle thickness of 2 to 3 times that of primary particles that are not flocculated, and thus, in a coating film having a small film thickness, the particles are not be contained within the coating film and protrusions of the particles may cause seeds or a decrease in gloss, which is an obstacle in reducing the film thickness of a coating film.

Furthermore, in the technique described in Patent Literature 4, it is necessary to apply a large force at the time of stirring in a coating treatment reaction in order to prevent the composite particles from being fixed to each other, and particularly in the case of particles having a small thickness, particle deformation due to the stirring is significant, and thus the designability of the metal particles after being coated may be decreased, and thus the solution has been required.

In addition, the above-described corrosion occurs from the surface of the metal, and thus the surface smoothness is decreased, and the designability of the metal pigment is also decreased.

Among the metal pigments, particularly an aluminum flake pigment is an amphoteric metal, and thus there is a

problem that aluminum reacts with water in an aqueous coating material to generate gas, and as a countermeasure for this, it is effective to coat the surface of the aluminum flake pigment with a metal such as polysiloxane or a metalloid oxide.

When the metal particles are coated with a certain amount or more of a metal or metalloid oxide, hydrogen gas is suppressed from being generated in normal handling of a coating material. Patent Literature 5 describes that a metallic effect pigment excellent in gas stability is provided by combining, in an alkoxysilane reaction step, an acid catalyst and a base catalyst to coat a metal pigment with a polysiloxane layer.

However, when a strong shearing force is applied to a metal pigment due to strong stirring/mixing at the time of manufacturing a coating material, long-time circulation (circulation/stirring of a coating material) at the time of coating, or the like, the coating layer is damaged, leading to a decrease in storage stability, such as gas generation, and a change in color tone. In particular, when the aspect ratio of a metal pigment particle itself is increased, mechanical stability is decreased and the particle is deformed due to circulation, and as a result, storage stability, such as gas generation, and color tone are further decreased.

For Patent Literature 5, it is conceivable that, since the reaction rate (degree of crosslinking) of polysiloxane is not controlled and the reaction rate is not sufficiently increased, there is a problem that the coating layer is damaged during manufacturing of the coating material or circulation of the coating material, and mechanical stability, storage stability (gas generation), and color tone are decreased.

Furthermore, in the silicon compound treatment, alkoxysilane, then water, and a catalyst are put in an aluminum pigment slurry by a stirring vessel-type reaction apparatus to promote hydrolysis and dehydration condensation reactions, and a silica treatment is performed on the aluminum flakes. At this time, the aluminum flakes are flocculated by a condensate, and thus desired hiding property and luminance cannot be exhibited when a coating material is formed, or aluminum flakes that are not sufficiently treated may be formed on a surface layer of a treatment liquid or at a liquid contact portion with the reactor. When such aluminum flakes are mixed into, gas may be generated or color tone may be deteriorated.

## CITATION LIST

### PATENT LITERATURE

PATENT LITERATURE 1: JP-A-2003-147226
PATENT LITERATURE 2: WO 2004/096921 A
PATENT LITERATURE 3: WO 2018/180936 A
PATENT LITERATURE 4: JP-A-2018-172617
PATENT LITERATURE 5: JP-A-2013-518948

## SUMMARY OF INVENTION

### TECHNICAL PROBLEM

An object of the present application is to provide a method for manufacturing a metal pigment (hereinafter, also referred to as a "metal pigment composition") with less flocculation.

Another object of the present application is to provide a metal pigment composition comprising composite particles, in which the disadvantages of the conventional techniques are eliminated, that is, the metal pigment composition is excellent in storage stability, has a reduced flocculation property of individual particles, and has excellent hiding power, color tone, and the like.

Yet another object of the present application is to provide a manufacturing apparatus for a metal pigment composition with less flocculation.

### SOLUTION TO PROBLEM

The present inventor has found, as a result of intensive studies, that, when a metal particle is coated with a silicon compound using a stirring vessel-type reaction apparatus, the size of the stirring vessel-type reaction apparatus and stirring conditions (stirring blade conditions and linear speed) are controlled to be within predetermined ranges, whereby the metal particle is not damaged and flocculation, possibly occurring at the time of condensation, can be suppressed, and have completed the present invention.

That is, the present application and aspects thereof are as follows:

1. A method for manufacturing a metal pigment, using a stirring vessel-type reaction apparatus and comprising following steps (1) to (3):

(1) dispersing metal particles in a solvent;
(2) coating the metal particles with a silicon compound; and
(3) filtering and washing the metal particles, wherein

the stirring vessel-type reaction apparatus has:

a reactor having a volume of 100 L or more; and
the ratio of the maximum diameter of a stirring blade to the diameter of the reactor is in a range of 0.2 to 1.0, and the shortest distance between an inner surface of the reactor and a tip of the stirring blade is 10 mm or more; and
the tip speed of the stirring blade, while being stirred, is 1 to 20 m/s.

2. The manufacturing method according to item 1 above, wherein:

in the step (1), the average particle size of the metal particles in a dispersion is 1.2 times or less the average particle size of the metal particles as a raw material, and the metal particles in the dispersion are uniformly dispersed in the solvent;
in the step (2), stirring is performed to not form a stagnation portion in a surface layer and a bottom; and
the average particle size of composite particles contained in the metal pigment obtained after the step (3) is 1.3 times or less the average particle size of the metal particles as a raw material.

3. The manufacturing method according to item 1 or 2 above, wherein in the step (1) and/or (2), a treatment liquid extracted from a vicinity of the bottom of the reactor is returned to the reactor at an upper portion of the reactor for circulation.

4. The manufacturing method according to any one of above items 1 to 3, wherein in the step (2), after a silicon-containing raw material and a catalyst are put in, an inner wall of the reactor near a liquid contact portion between the reactor and a mixed liquid is washed with a reaction liquid or the solvent to reduce deposits or stagnant matters.

5. The manufacturing method according to any one of above items 1 to 4, wherein the step (2) is performed for 2 hours or more.

6. The manufacturing method according to any one of above items 1 to 5, wherein the manufactured metal pigment comprises composite particles having metal particles and one or more coating layers formed on surfaces of the metal particle, wherein

(1) the composite particles have a flaky shape, and
(2) $D_{50}$ based on volume is 0.1 to 30 $\mu$m when a particle size distribution of the composite particles is measured by a laser diffraction type particle size distribution meter.

7. The manufacturing method according to item 6 above, wherein the metal particles contain aluminum or an aluminum alloy.

8. The manufacturing method according to item 6 or 7 above, wherein the one or more coating layers include a silicon compound-containing layer.

9. The manufacturing method according to any one of above items 6 to 8, wherein at least one layer of the coating layers is a polysiloxane layer.

10. The manufacturing method according to any one of above items 6 to 9, wherein the composite particles have an average aspect ratio of 15 to 500.

11. The manufacturing method according to any one of above items 1 to 10, wherein a stirring state reflected by a stirring Re number, is 3,000 or more and 5,000 or less, wherein the stirring Re number is calculated by the following equation:

$$\text{Stirring Re number} = (\rho \times n \times d^2)/\mu$$

wherein, $\rho$ indicates the density (kg/m$^3$) of a mixed liquid to be stirred at 25°C, n indicates a stirring rotation speed (rps), d indicates a stirring blade diameter (m), and $\mu$ indicates the viscosity (Pa·s) of a mixed liquid to be stirred at 25°C.

12. A stirring vessel-type reaction apparatus used in the manufacturing method according to any one of above items 1 to 11, wherein the stirring vessel-type reaction apparatus has:

a reactor having a volume of 100 L or more; and
the ratio of the maximum diameter of a stirring blade to the diameter of the reactor is in a range of 0.2 to 1.0, and the shortest distance between an inner surface of the reactor and a tip of the stirring blade is 10 mm or more.

ADVANTAGEOUS EFFECTS OF INVENTION

According to the present invention, it is possible to provide a method for manufacturing a metal pigment composition with less flocculation. According to an embodiment, it is possible to obtain a metal pigment composition that has a reduced flocculation property of individual particles, has excellent hiding power and color tone (brightness feeling, etc.), and generates less gas. In addition, according to an embodiment, it is possible to provide a stirring vessel-type reaction apparatus for manufacturing the metal pigment composition.

DESCRIPTION OF EMBODIMENTS

Hereinafter, the present invention will be described with reference to typical or preferred embodiments, but the present invention is not limited by these embodiments. Unless clearly indicated, these embodiments may be freely combined within the scope of the invention defined in the appended claims.
The present invention is a method for manufacturing a metal pigment (composition), using a stirring vessel-type reaction apparatus and comprising following steps (1) to (3):

(1) dispersing metal particles in a solvent;
(2) coating the metal particles with a silicon compound; and
(3) filtering/washing the metal particles, wherein

the stirring vessel-type reaction apparatus:

includes a reactor having a volume of 100 L or more; and
has the ratio of the maximum diameter of a stirring blade to the diameter of the reactor is in a range of 0.2 to 1.0, and the shortest distance between an inner surface of the reactor and a tip of the stirring blade is 10 mm or more; and
wherein the tip speed of the stirring blade, while being stirred, is 1 to 20 m/s.

Hereinafter, details of the present invention will be described.

Reactor-type reaction apparatus

In the method for manufacturing a metal pigment (also referred to as "metal pigment composition") of the present invention, a stirring vessel-type reaction apparatus is used. The stirring vessel-type reaction apparatus is an apparatus of a stirring vessel-type that stirs by a stirring blade (impeller). As a result of exerting a circulating action that causes the entire reaction system, including a liquid phase, to flow and a pressure shearing action by the stirring blade, creation of flocculation of the composite particles can be more effectively suppressed.
The shape of the stirring blade is not particularly limited, and for example, an anchor type, a propeller type, a turbine type, an inclined turbine type, a fan turbine type, a paddle type, an inclined paddle type, or a gate type can be used. The Maxblend blade (manufactured by Sumitomo Heavy Industries Process Equipment Co., Ltd.), the Fullzone blade (manufactured by KOBELCO ECO-SOLUTIONS CO., LTD.), and the like are also suitable. In addition, stirring blades having these shapes can be combined in multiple stages.
The stirring speed is preferably set such that the stirring blade is not exposed by vortex created by the stirring. In addition, in order to suppress vortex to be created by the stirring, a cylindrical vessel, a square vessel, a vessel provided with a baffle plate, or the like can be suitably used.
In the manufacturing method of the present invention, it is desirable to set the optimum sizes of the reactor (also

referred to as a "stirring vessel") and the stirring blade and the speed of the stirring blade in relation to the amount and physical properties (density, viscosity, etc.) of the mixed liquid. The size of the reactor may be selected such that the maximum amount of the mixed liquid to be used in the series of the steps is 20 to 80% of the reactor, and the volume of the reactor is 100 L or more in order to prepare an industrially necessary amount of a pigment having a small quality variation. In one embodiment, the volume of the reactor may be desirably 150 or more, or may be desirably 200 L or more. The shape of the reactor is preferably a cylindrical shape in order to reduce a stagnation portion and uniformly stir the whole. In the case of a cylindrical reactor, the ratio, L/D, of a height (L) to an inner diameter (D) of the reactor is generally in the range of 0.5 to 3.0, and is usually in the range of 1 to 2. As for the size of the stirring blade, the ratio of the maximum diameter of the stirring blade to the inner diameter of the reactor is in the range of 0.2 to 1.0, and is preferably about 0.4 to 0.6. It is desirable to appropriately select the shape (including the length) of the stirring blade according to the physical properties of the mixed liquid, and it is important that, in the entire steps, stirring is performed in the entire reactor. In order to prevent formation of an unstirred stagnation portion particularly near the liquid surface or the bottom surface of the reactor, it is preferable to combine an inclined paddle type, an inclined turbine type, or a propeller type in multiple stages, or to use the Maxblend blade or the Fullzone blade, which easily creates an up-and-down flow. The volume of the reactor is 100 L or more, and the shortest distance, at this time, between the inner surface of the reactor (including the baffle plate) and the stirring blade is 10 mm or more. The shortest distance between the inner surface of the reactor (including the baffle plate) and the stirring blade is more preferably 20 mm or more, even more preferably 40 mm or more, yet even more preferably 60 mm or more, and even further preferably 100 mm or more. This makes it easy to suppress damage or deformation of the metal particles.

The volume of the reactor is 100 L or more, and the tip speed (linear speed) of the stirring blade is 1 to 20 m/s, more preferably 1.5 to 10 m/s, and particularly preferably 2 to 8 m/s. When the tip speed of the stirring blade is within the range of 1 to 20 m/s, the dispersibility of the composite particles in the metal pigment composition to be manufactured can be enhanced, and as a result, it becomes easier to obtain a metal pigment composition that has a reduced flocculation property of individual particles, has excellent hiding power and color tone, and generates less gas. In addition, when the tip speed (linear speed) of the stirring is within the above range, damage of the metal particles (e.g., flaky shaped aluminum powder) is prevented, the rates of the hydrolysis/condensation reactions are appropriately controlled, and flocculation of the composite particles can be effectively suppressed.

As an index indicating a stirring state, a stirring Reynolds number (hereinafter, abbreviated as a "stirring Re number") is used. The stirring Re number does not reflect the shapes and sizes, other than diameter, of the reactor and the stirring blade. Therefore, the stirring Re number is only a guide and is not particularly limited, but is preferably 3,000 or more, and more preferably 5,000 or more. The upper limit of the stirring Re number can vary depending on the type, scale, and the like of the stirring apparatus. The upper limit of the stirring Re number may be about 100,000 in a normal lab scale, but in the case of using a scaled-up large apparatus, it may be more than 100,000 as long as the desired effects of the third invention of the present application are not impaired. It is also acceptable even if this upper limit is, for example, about 1 million.

Here, the stirring Re number is calculated by the following equation.

$$\text{Stirring Re number} = (\rho \times n \times d^2)/\mu$$

(wherein, $\rho$ indicates the density (kg/m$^3$) of a mixed liquid to be stirred at 25°C, n indicates a stirring rotation speed (rps), d indicates a stirring blade diameter (m), and $\mu$ indicates the viscosity (Pa · s) of a mixed liquid to be stirred at 25°C.)

Metal pigment composition

The metal pigment composition manufactured according to the present invention contains a composite particle, and the composite particle contains a metal particle and one or more coating layers formed on the surface of the metal particle. That is, one or more coating layers are formed on the surfaces of a metal particle to be a core.

Metal particles

The material of the metal particles (core particles) is not particularly limited, and may be any metal used for known or commercially available metal pigments, such as aluminum, an aluminum alloy, zinc, iron, magnesium, nickel, copper, silver, tin, chromium, or stainless steel. In the present description, the metal of the metal particles contained in the metal pigment composition includes not only a metal simple substance but also an alloy and an intermetallic compound. The metal particles may be used alone or in combination of two or more.

The average particle size of the metal particles is not particularly limited, but may be such an average particle size that can achieve $D_{50}$ in the particle size distribution of the composite particles. That is, the volume average particle size ($D_{50}$) of the metal particles may be set such that the $D_{50}$ is 0.1 to 30 $\mu$m when the volume distribution of the composite

particles is measured by a laser diffraction particle size distribution meter. Here, the $D_{50}$ based on volume, when the particle size distribution of the composite particles is measured by a laser diffraction particle size distribution meter, refers to the particle size at a cumulative frequency of 50% in a volume-based cumulative particle size distribution. The laser diffraction particle size distribution meter is not particularly limited, but "LA-300" (manufactured by HORIBA, Ltd.) or the like can be used. As the measuring solvent, mineral spirit can be used. For example, a metal pigment composition comprising composite particles as a sample is subjected to ultrasonic dispersion for 2 minutes as a pretreatment, and then it is put into a reactor. After it is confirmed that the metal pigment composition is properly dispersed, the $D_{50}$ can be measured.

The average particle size of the metal particles can be controlled by appropriately adjusting, in the step of grinding and sieving/filtering raw material atomized metal powder (e.g., aluminum powder) using a ball mill or the like, the particle size of the raw material atomized metal powder, the specific gravity and mass per one grinding ball in the case of using a ball mill, the rotation speed of a grinder, the degrees of the sieving and filter press, and the like.

The shape of the metal particles is not limited, but is particularly desirably a flaky shape (flake-like shape). As a result, the composite particles contained in the metal pigment composition manufactured according to the present invention can also have a flaky shape, and as a result, high hiding power and the like can be more reliably obtained. From such a viewpoint, the aspect ratio (shape factor obtained by dividing an average particle size by an average thickness) of the flaky shaped metal particles is preferably 1 to 1,000, and particularly preferably 15 to 500. When the aspect ratio of the metal particles is 1 or more, a higher brightness feeling can be obtained. In addition, when the aspect ratio of the metal particles is 1,000 or less, the mechanical strength of the flakes is maintained, and a stable color tone can be obtained. Here, the average thickness of the metal particles used in the present invention can be calculated from the water surface diffusion area and density of the metal particles.

In addition, the metal particles do not necessarily need to be composed only of metal, and for example, particles of a synthetic resin, particles in which the surfaces of inorganic particles, such as mica or glass, are coated with metal, and the like can also be used as long as the effects of the present invention are not impaired. In the present invention, particles formed from aluminum or an aluminum alloy are desirable in terms of particularly high weather resistance, small specific gravity, easy availability, and the like.

Particularly suitable as the metal particles constituting the composite particles are aluminum flakes that are generally frequently used for metallic pigments. As the aluminum flakes, those having surface properties, particle sizes, and shapes that are required for metallic pigments, such as surface glossiness, whiteness, and brightness, are suitable. The aluminum flakes are commercially available usually in a paste state. The paste-like aluminum flakes may usually contain flaky shaped aluminum powder, mineral spirit (aliphatic hydrocarbon) used at the time of pulverization, a residual content of fatty acid, and an organic solvent such as solvent naphtha or xylene. The paste-like aluminum flakes may be used as they are, or may be used after the fatty acid and the like on the surfaces are removed with an organic solvent or the like in advance. In addition, a so-called aluminum-deposited foil, having a volume-based average particle size ($D_{50}$) of 3 to 30 $\mu$m and an average thickness (t) of 5 to 50 nm, can also be used.

Coating layer

The composite particle contained in the metal pigment composition manufactured according to the present invention has one or more coating layers formed on the surface of a metal particle to be the core of the composite particle. At least one of the coating layers is a silicon compound-containing layer. When at least one of the coating layers is a silicon compound-containing layer, gas generation in an aqueous coating material can be suppressed, good storage stability can be obtained, and water resistance, when a coating film is formed, is excellent. The coating layer of the composite particle may have another coating layer (hereinafter, referred to as a "second coating layer") in addition to the silicon compound-containing layer. Such a second coating layer will be further described later.

Silicon compound-containing layer

The silicon compound-containing layer is desirably a layer composed of a compound containing particularly a Si-O- bond (siloxane bond). Examples of such a layer include a layer containing at least one of a silane-based compound and a silicon oxide. Examples of such a compound include silane-based compounds $[H_3SiO(H_2SiO)_nSiH_3]$ (wherein, n indicates an arbitrary positive integer) and silicon oxides represented by $SiO_2$, $SiO_2 \cdot nH_2O$ (wherein, n indicates an arbitrary positive integer), and the like. These silane-based compounds and silicon oxides may be either crystalline or amorphous, but are particularly preferably amorphous. Therefore, for example, a layer containing amorphous silica can also be suitably adopted as the layer containing silicon oxide (silica, etc.).

In addition, the layer composed of a compound containing a Si-O bond may be a layer formed by using an organosilicon compound (including a silane coupling agent) as a starting material. In this case, the silicon compound-containing layer may contain an organosilicon compound or a component derived from the organosilicon compound as long as the effects of the third invention of the present application are not impaired. In a typical example, a layer composed

of a compound containing a Si-O bond can be formed by hydrolyzing an organosilicon compound.

The silicon compound-containing layer may contain additives other than the silicon compound, impurities, and the like as long as the characteristics of the present invention are not impaired.

The content of silicon contained in the silicon compound-containing layer is not particularly limited, but is preferably 1 to 30 parts by mass based on 100 parts by mass of the metal particles, and particularly more preferably 2 to 20 parts by mass. When the silicon content of the silicon compound-containing layer is 1 part by mass or more based on 100 parts by mass of the metal particles, the corrosion resistance, water dispersibility, stability, and the like of the metal pigment composition can be maintained high. When the silicon content of the silicon compound-containing layer is 30 parts by mass or less based on 100 parts by mass of the metal particles, flocculation of the composite particles and a decrease in hiding property or color tone, such as a metallic gloss feeling, can be prevented.

The coating layer of the composite particle contained in the metal pigment composition manufactured according to the present invention is particularly preferably hydrophilic. The composite particles usually form a metal pigment composition in the form of being dispersed in an aqueous solvent (water or a mixed solvent containing water and an organic solvent), and when the coating layer has a hydrophilic surface, the composite particles can be highly dispersed in such an aqueous solvent. Moreover, the silicon oxide (amorphous silica, etc.) is very stable in an aqueous solvent, so that it is possible to provide a metal pigment composition comprising composite particles that are highly stable in an aqueous solvent. From such a viewpoint, in the composite particle contained in the metal pigment composition manufactured according to the present invention, at least the outermost layer is desirably a silicon compound-containing layer (particularly, a layer composed of a compound containing a Si-O bond). When the coating layer is composed of a plurality of layers, in addition to the outermost silicon compound-containing layer, a silicon compound-containing layer (particularly, a Si-O-based coating layer) may be separately formed as a layer other than the outermost layer.

Second coating layer

The coating layers of the composite particle contained in the metal pigment composition manufactured according to the present invention are not particularly limited as long as at least one layer is a silicon compound-containing layer, but a coating layer other than the silicon compound-containing layer can be formed as necessary.

The second coating layer may contain, for example, at least one of a metal (alkali metal; alkaline earth metal; metal such as manganese, iron, cobalt, nickel, copper, or silver), a metal oxide (titanium oxide, zirconium oxide, iron oxide, or the like), a metal hydrate, and a resin (synthetic resin such as an acrylic resin, an alkyd resin, a polyester resin, a polyurethane resin, a polyvinyl acetate resin, a nitrocellulose resin, or a fluororesin). As the second coating layer, for example, a molybdenum-containing coating film, a phosphoric acid compound coating film, or the like can be formed. When the second coating layer is provided, the corrosion resistance of the metal particle can be improved, and the formation of the silicon compound-containing layer can be promoted.

The second coating layer (when formed) is preferably formed particularly between the metal particle and the silicon compound-containing layer. Therefore, for example, a layer configuration of "metal particle/second coating layer/silicon compound-containing layer" can be suitably adopted. Although not particularly limited, examples of the molybdenum-containing coating film can include those disclosed in JP-A-2003-147226, WO 2004/096921 A, JP-B-5979788, and JP-A-2019-151678. Examples of the phosphoric acid compound coating film include those disclosed in JP-B-4633239. Preferred examples of the molybdenum-containing material constituting the molybdenum-containing coating film include a mixed coordination type heteropolyanion compound disclosed in JP-A-2019-151678.

The second coating layer may be formed outside the metal particle and the silicon compound-containing layer. Alternatively, the constituent components (such as a molybdenum-containing compound and a phosphoric acid compound) of the second coating layer may be contained in the silicon compound-containing layer together with the silicon compound.

The second coating layer may be a layer containing another corrosion inhibitor in order to further improve the corrosion resistance of the metal particle (preferably aluminum particle or aluminum alloy particle) to be a core. The corrosion inhibitor to be added is not particularly limited, and any known corrosion inhibitor can be used. The use amount thereof may be within a range that does not inhibit the desired effects of the third invention of the present application. Examples of such a corrosion inhibitor include metal salts of an acidic phosphoric acid ester, a dimer acid, an organophosphorus compound, and a molybdic acid.

From the viewpoint of adhesion and chemical resistance when a coating film is formed, an organic oligomer or polymer can be further contained in the silicon compound-containing layer and/or the second coating layer of the composite particle contained in the metal pigment composition, or in a separate layer.

In addition, from the viewpoint of storage stability, at least one selected from the group consisting of inorganic phosphoric acids and salts thereof, and acidic organic (phosphorous) phosphoric acid esters and salts thereof may be contained in the silicon compound-containing layer and/or the second coating layer of the composite particle, or in a separate layer. These compounds are not particularly limited, but for example, compounds disclosed in JP-

A-2019-151678 can be used.

Method for manufacturing metal pigment composition

The method for manufacturing a metal pigment composition of the present invention includes the following steps (1) to (3):

(1) dispersing the metal particles in a solvent;
(2) coating the metal particles with a silicon compound; and
(3) filtering/washing the metal particles.

Step (1)

The step (1) is a step of dispersing metal particles in a solvent. In order to obtain a metal pigment composition with less flocculation, the metal particles and the solvent are stirred in this step to sufficiently disperse the metal particles in the solvent. In addition, an ultrasonic treatment described later may be performed.

The solvent to be used in the manufacturing method of the present invention, that is, the solvent for the hydrolysis reaction and/or condensation reaction of the organosilicon compound may be appropriately selected according to the type of the silicon-containing raw material to be used, and in general, water, a hydrophilic organic solvent, or a mixed solvent thereof can be used. When these solvents are used, the uniformity of the reactions and the uniformity of the obtained hydrolysate and/or condensation reaction product can be enhanced. In an aspect in which the silicon compound-containing layer is directly formed on the metal particle, it is particularly preferable from the viewpoint of avoiding rapid progress of the reaction between the metal particle and water that the solvent of the mixed liquid contains a hydrophilic organic solvent. In the present invention, a mixed solvent of water and a hydrophilic organic solvent can be suitably used.

The hydrophilic organic solvent is not particularly limited, and examples thereof include: alcohols such as methanol, ethanol, propanol, butanol, isopropanol, and octanol; ether alcohols such as ethylene glycol monoethyl ether, ethylene glycol monobutyl ether, diethylene glycol monoethyl ether, diethylene glycol monobutyl ether, propylene glycol monoethyl ether, propylene glycol monomethyl ether, and dipropylene glycol monomethyl ether, and esters thereof; glycols of ethylene glycol, propylene glycol, 1,3-butanediol, 1,4-butanediol, polyoxyethylene glycol, polyoxypropylene glycol, and ethylene propylene glycol; and alkoxyalcohols such as ethyl cellosolve, butyl cellosolve, acetone, methoxypropanol, ethoxypropanol, and others. These can be used alone or in combination of two or more.

When a mixed solvent of water and a hydrophilic organic solvent is used as the solvent, the ratio between the two is not particularly limited. In an aspect in which the silicon compound-containing layer is directly formed on the metal particle, it is preferable from the viewpoint of avoiding rapid progress of the reaction between the metal particle and water that, before the silicon compound is put in, the content of water is set to 20% by mass or less based on 100% by mass of the total of both. The lower limit of the content of water in this case is not limited, but may be usually about 1% by mass.

The use amount of the solvent in the manufacturing method of the present invention (in a case where pre-dispersion of the metal particles is performed, the amount of a solvent for the dispersion is excluded) is not limited. The use amount is usually sufficient when it is about 100 to 10,000 parts by mass based on 100 parts by mass of the metal particles (solid content), and is particularly preferable when it is 200 to 1,000 parts by mass. When the use amount of the solvent is 100 parts by mass or more, an increase in the viscosity of the mixed liquid (slurry) is suppressed, and appropriate stirring can be performed. In addition, when the use amount of the solvent is 10,000 parts by mass or less, an increase in the recovery and recycling cost of the treatment liquid can be prevented.

In the step (1), when external circulation is preferably performed in which a part (e.g., 0.5 to 30% by mass of the entire dispersion per 1 minute, preferably 1 to 20% by mass, and more preferably 1 to 15% by mass) of the solvent (hereinafter, referred to as a "dispersion") to which the metal particles have been added is once extracted to the outside of the reactor and then returned to the reactor again, the degree of the dispersion can be more enhanced. When an ultrasonic treatment is performed outside the reactor in the middle of the flow path for the external circulation, the dispersibility can be further enhanced.

The ultrasonic treatment is not particularly limited, but can be usually performed at 10 to 1,000 W, and preferably at 50 to 800 W for usually 20 seconds to 10 minutes, and preferably about 30 seconds to 5 minutes. From the viewpoint of appropriately adjusting the strength of the stirring to achieve sufficient dispersion, the use amount of the solvent for the pre-dispersion may be usually about 100 to 10,000 parts by mass based on 100 parts by mass of the metal particles (solid content), preferably 200 to 5,000 parts by mass, and more preferably 300 to 1,000 parts by mass.

Such pre-dispersion of the metal particles can be usually performed at 10 to 80°C, preferably at 15 to 60°C, and most preferably at around room temperature (about 20 to 30°C). The pre-dispersion of the metal particles can also be performed for a period of 5 minutes to 2 hours (including a time for the ultrasonic treatment when performed), and preferably for a period of 10 minutes to 1 hour.

In the step (1), the average particle size ($D_{50}$) of the metal particles in the dispersion is preferably 1.2 times or less the average particle size ($D_{50}$) of the metal particles as a raw material. When the average particle size is suppressed to 1.2 times or less the average particle size of the metal particles as a raw material, the flocculation property of individual particles is suppressed to be small and a uniform silicon compound-containing layer and the like are easily obtained, and thus gas generation in an aqueous coating material can be suppressed and good storage stability is easily obtained. In addition, the finally obtained coating film formed by using the metal pigment composition comprising composite particles also easily exhibits high hiding power and brightness feeling and the like. This ratio is more preferably 1.1 times or less.

Step (2)

The step (2) is a step in which, in a mixed liquid obtained by adding a silicon-containing raw material containing at least one organosilicon compound and, if necessary, other optional components to the dispersion of the step (1), the organosilicon compound is subjected to hydrolysis/(partial) condensation reactions under stirring, whereby the metal particles are coated with a silicon compound.

As the silicon-containing raw material, an organosilicon compound can be used. The organosilicon compound is not limited, but preferably, at least one of an organosilicon compound represented by the following formula (1) (typically, tetraalkoxysilane) and/or a condensate thereof, and a silane coupling agent represented by any one of the following formulas (2) to (4) can be suitably used.

$$Si(OR^1)_4 \cdots \quad (1)$$

(wherein, $R^1$ is a hydrogen atom or a hydrocarbon group having 1 to 8 carbon atoms, and all of $R^1$s may the same, some may be the same, or all may be different.)

$$R^2_mSi(OR^3)_{4-m} \cdots \quad (2)$$

(wherein, $R^2$ is a hydrogen atom or a hydrocarbon group having 1 to 30 carbon atoms and optionally containing a halogen group, and $R^3$ is a hydrogen atom or a hydrocarbon group having 1 to 8 carbon atoms. $R^2$ and $R^3$ may be the same or different, and when there are two or more $R^2$s or $R^3$s, all may be the same, some may be the same, or all may be different. $1 \le m \le 3$.)

$$R^4_pR^5_qSi(OR^6)_{4-p-q} \cdots \quad (3)$$

(wherein, $R^4$ is a group containing a reactive group capable of chemically bonding to another functional group, $R^5$ is a hydrogen atom or a hydrocarbon group having 1 to 30 carbon atoms and optionally containing a halogen group, and $R^6$ is a hydrogen atom or a hydrocarbon group having 1 to 8 carbon atoms. When there are two or more $R^4$s, $R^5$s, or $R^6$s, all may be the same, some may be the same, or all may be different. $1 \le p \le 3$, $0 \le q \le 2$, and $1 \le p + q \le 3$.)

$$R^7_rSiCl_{4-r} \cdots \quad (4)$$

(wherein, $R^7$ is a hydrogen atom or a hydrocarbon group having 1 to 30 carbon atoms and optionally containing a halogen group, and when there are two or more $R^7$s, all may be the same, some may be the same, or all may be different. $0 \le r \le 3$.)

Examples of the hydrocarbon group in $R^1$ of the formula (1) include methyl, ethyl, propyl, butyl, hexyl, and octyl, which may be branched or linear. Among these hydrocarbon groups, methyl, ethyl, propyl, and butyl are particularly preferable. In addition, all four $R^1$s may be the same, some may be the same, or all may be different.

Preferred examples of the organosilicon compound represented by the formula (1) include tetramethoxysilane, tetraethoxysilane, tetraisopropoxysilane, and tetrabutoxysilane. Among them, tetraethoxysilane is particularly preferable.

Examples of the hydrocarbon group in $R^2$ of the formula (2) include methyl, ethyl, propyl, butyl, hexyl, octyl, decyl, dodecyl, oleyl, stearyl, cyclohexyl, phenyl, benzyl, and naphthyl, which may be branched or linear or may contain a halogen group such as fluorine, chlorine, or bromine. Among them, a hydrocarbon group having 1 to 18 carbon atoms is particularly preferable. When there are two or more $R^2$s, all may be the same, some may be the same, or all may be different. The number of $R^2$s in the molecule is m = 1 to 3, that is, 1 to 3 in the formula (2), but m is more preferably 1 or 2.

Examples of the hydrocarbon group in $R^3$ of the formula (2) include methyl, ethyl, propyl, butyl, hexyl, and octyl, which may be branched or linear. Among these hydrocarbon groups, methyl, ethyl, propyl, and butyl are particularly preferable. When there are two or more $R^3$s, all may be the same, some may be the same, or all may be different.

Preferred examples of such an organosilicon compound (silane coupling agent) of the formula (2) include methyltrimethoxysilane, methyltriethoxysilane, methyltributoxysilane, dimethyldimethoxysilane, dimethyldiethoxysilane, dimethyldibutoxysilane, trimethylmethoxysilane, trimethylethoxysilane, n-propyltrimethoxysilane, n-propyltriethoxysi-

lane, n-propyltributoxysilane, butyltrimethoxysilane, butyltriethoxysilane, butyltributoxysilane, dibutyldimethoxysilane, dibutyldiethoxysilane, dibutyldibutoxysilane, isobutyltrimethoxysilane, isobutyltriethoxysilane, hexyltrimethoxysilane, hexyltriethoxysilane, dihexyldimethoxysilane, dihexyldiethoxysilane, octyltrimethoxysilane, octyltriethoxysilane, dioctyldimethoxysilane, dioctyldiethoxysilane, dioctylethoxybutoxysilane, decyltrimethoxysilane, decyltriethoxysilane, didecyldimethoxysilane, didecyldiethoxysilane, octadecyltrimethoxysilane, octadecyltriethoxysilane, dioctadecyldimethoxysilane, dioctadecyldiethoxysilane, phenyltrimethoxysilane, phenyltriethoxysilane, diphenyldimethoxysilane, diphenyldiethoxysilane, trifluoropropyltrimethoxysilane, heptadecafluorodecyltrimethoxysilane, tridecafluorooctyltrimethoxysilane, tridecafluorooctyltriethoxysilane, 3-chloropropyltrimethoxysilane, 3-chloropropyltriethoxysilane, and 3-chloropropyltributoxysilane.

Examples of the reactive group capable of chemically bonding to another functional group in $R^4$ of the formula (3) include a vinyl group, an epoxy group, a styryl group, a methacryloxy group, an acryloxy group, an amino group, a ureido group, a mercapto group, a polysulfide group, and an isocyanate group.

When there are two or more $R^4$s, all may be the same, some may be the same, or all may be different. The number of $R^4$ in the molecule is p = 1 to 3, that is, 1 to 3 in the formula (3), but more preferably p = 1.

Examples of the hydrocarbon group of $R^5$ in the formula (3) include methyl, ethyl, propyl, butyl, hexyl, octyl, decyl, dodecyl, oleyl, stearyl, cyclohexyl, phenyl, benzyl, and naphthyl, which may be branched or linear or may contain a halogen group such as fluorine, chlorine, or bromine. Among them, a hydrocarbon group having 1 to 18 carbon atoms is particularly preferable. When there are two or more $R^5$s, all may be the same, some may be the same, or all may be different.

Examples of the hydrocarbon group in $R^6$ of the formula (3) include methyl, ethyl, propyl, butyl, hexyl, and octyl, which may be branched or linear. Among these hydrocarbon groups, methyl, ethyl, propyl, and butyl are particularly preferable. When there are two or more $R^6$s, all may be the same, some may be the same, or all may be different.

Preferred examples of such an organosilicon compound (silane coupling agent) of the formula (3) include vinyltrimethoxysilane, vinyltriethoxysilane, vinyl-tris(2-methoxyethoxy)silane, 2-(3,4-epoxycyclohexyl)ethyltrimethoxysilane, 3-glycidoxypropylmethyldiethoxysilane, 3-glycidoxypropyltrimethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, N-methyl-3-aminopropyl-trimethoxysilane, N-2-(aminoethyl)-3-aminopropylmethyldimethoxysilane, N-2-(aminoethyl)-3-aminopropylmethyldimethoxysilane, N-2-(aminoethyl)-3-aminopropylmethyldiethoxysilane, 3-aminopropyltrimethoxysilane, 3-aminopropyltriethoxysilane, N-phenyl-3-aminopropyltrimethoxysilane, N-(vinylbenzyl)-2-aminoethyl-3-aminopropyltrimethoxysilane, 3-triethoxysilyl-N-(1,3-dimethylbutylidene)propylamine, 3-ureidopropyltriethoxysilane, 3-mercaptopropylmethyldimethoxysilane, 3-mercaptopropyltrimethoxysilane, 3-mercaptopropyl-triethoxysilane, bis(triethoxysilylpropyl)tetrasulfide, and 3-isocyanatopropyltriethoxysilane.

Examples of the hydrocarbon group in $R^7$ of the formula (4) include methyl, ethyl, propyl, butyl, hexyl, octyl, decyl, dodecyl, oleyl, stearyl, cyclohexyl, phenyl, benzyl, and naphthyl, which may be branched or linear or may contain a halogen group such as fluorine, chlorine, or bromine. Among them, a hydrocarbon group having 1 to 12 carbon atoms is particularly preferable. When there are two or more $R^7$s, all may be the same, some may be the same, or all may be different. The number of $R^7$ in the molecule is r = 0 to 3, that is, zero to three $R^7$s in the formula (4), but r = 1 to 3 is more preferable.

Preferred examples of such an organosilicon compound (silane coupling agent) of the formula (4) include methyltrichlorosilane, dimethyldichlorosilane, trimethylchlorosilane, octyldimethylchlorosilane, phenyltrichlorosilane, vinyltrichlorosilane, and tetrachlorosilane.

The organosilicon compound represented by the general formula (1) may be used alone or in combination of two or more. The silane coupling agent represented by any one of the general formulas (2), (3), and (4) may also be used alone or in combination of two or more. When two or more are used in combination, only two or more of the silane coupling agents represented by any one of (2), (3), and (4) may be used in combination, or the silane coupling agents represented by two or more different general formulas may be used in combination.

The hydrolysate of the organosilicon compound and/or the condensation reaction product thereof are/is obtained by stirring and mixing the organosilicon compound, water in an amount necessary for performing a hydrolysis reaction, and a hydrolysis catalyst. At that time, a hydrophilic solvent can also be used as necessary. Various conditions of the hydrolysis reaction (i.e., reaction for forming the silicon compound-containing layer) will be described later.

As a raw material for the hydrolysis reaction and/or the condensation reaction thereof for obtaining the hydrolysate of the organosilicon compound and/or the condensation reaction product thereof, an oligomer partially condensed in advance may be used.

The condensation reaction of the hydrolysate of the organosilicon compound may be performed simultaneously with the hydrolysis reaction of the organosilicon compound, or may be performed in separate steps and with a catalyst changed as necessary. At that time, heating may be performed as necessary.

In the mixed liquid, other additives may be blended as necessary as long as the effects of the present invention

are not impaired. For example, a catalyst such as a hydrolysis catalyst or a dehydration condensation catalyst, a surfactant, a metal corrosion inhibitor, and the like can be cited.

Among them, a hydrolysis catalyst can be suitably used. When a hydrolysis catalyst is blended, the pH of the mixed liquid can be adjusted and the organosilicon compound can be efficiently hydrolyzed, and dehydrated and condensed. As a result, it is possible to efficiently and reliably form the silicon compound-containing layer on the surface of the metal particle.

The hydrolysis catalyst is not particularly limited, and a known or commercially available hydrolysis catalyst may be used. As the hydrolysis catalyst, for example, inorganic acids such as hydrochloric acid, nitric acid, sulfuric acid, and phosphoric acid; organic acids such as benzoic acid, acetic acid, chloroacetic acid, salicylic acid, oxalic acid, picric acid, phthalic acid, and malonic acid; phosphonic acids such as vinyl phosphonic acid, 2-carboxyethane phosphonic acid, 2-aminoethane phosphonic acid, and octane phosphonic acid; and the like can be used. These hydrolysis catalysts may be used alone or in combination of two or more.

In addition, as the hydrolysis catalyst, for example, inorganic alkalis such as ammonia, sodium hydroxide, and potassium hydroxide; inorganic alkali salts such as ammonium carbonate, ammonium hydrogen carbonate, sodium carbonate, and sodium hydrogen carbonate; amines such as monomethylamine, dimethylamine, trimethylamine, monoethylamine, diethylamine, triethylamine, monoethanolamine, diethanolamine, triethanolamine, N,N-dimethylethanolamine, ethylenediamine, pyridine, aniline, choline, tetramethylammonium hydroxide, and guanidine; and salts of organic acids such as ammonium formate, ammonium acetate, monomethylamine formate, dimethylamine acetate, pyridine lactate, guanidinoacetic acid, and aniline acetate can also be used. These hydrolysis catalysts can be used alone or in combination of two or more.

The addition amount of the hydrolysis catalyst is not particularly limited, but may usually be set to 0.01 to 20 parts by mass based on 100 parts by mass of the metal particles (solid content), and is particularly preferably set to 0.02 to 10 parts by mass. When the addition amount is 0.01 parts by mass or more, the precipitation amount of the silicon compound-containing layer can be sufficient. In addition, when the addition amount is 20 parts by mass or less, flocculation of the metal particles can be effectively suppressed.

In preparing the mixed liquid, it is sufficient to uniformly mix these components in a mixed liquid, and the blending order is also not particularly limited.

The temperature of the mixed liquid may be either room temperature or increased temperature. In general, the temperature of the mixed liquid may be set to 20 to 90°C, and it is particularly preferable to control the temperature to be within the range of 30 to 80°C. When the temperature is 20°C or higher, the formation rate of the silicon compound-containing layer is increased, and the treatment time can be shortened. On the other hand, when the temperature is 90°C or lower, the reaction is easily controlled, and the probability that desired composite particles can be obtained can be increased.

When the mixed liquid containing the metal particles and the organosilicon compound is stirred, the temperature of the mixed liquid may usually be set to about 10 to 100°C, and is particularly preferably set to 30 to 80°C. When this temperature is 10°C or higher, the reaction time for obtaining a sufficient treatment effect can be shortened. In addition, when the temperature is 100°C or lower, the reaction for obtaining a desired metal pigment composition is more easily controlled.

The stirring time of the mixed liquid is not particularly limited as long as it is a time sufficient for forming a desired silicon compound-containing layer. The stirring time is, for example, 0.5 to 20 hours, is preferably set to 2 to 10 hours, and more preferably set to 3 to 6 hours. When the stirring time is 0.5 hours or more, a sufficient treatment effect can be obtained. In addition, when the stirring time is 20 hours or less, deterioration, such as corrosion, of the metal pigment during the reaction can be suppressed, and an increase in treatment cost can be suppressed.

When the silicon-containing raw material is subjected to hydrolysis/condensation reactions in the mixed liquid, the silicon compound-containing layer is formed on the surface of the metal particle (or via the second coating layer). This hydrolysis/condensation reactions can be performed particularly by adjusting the pH of the mixed liquid, or the like.

In adjusting the pH, the pH value of the mixed liquid changes particularly at a stage where the silicon compound-containing layer is formed on the surface of the metal particle (or via the second coating layer), and thus it is desirable to appropriately adjust the pH value such that it can be maintained within a certain range. At that time, it is desirable to adjust the pH value by adding a hydrolysis catalyst, but the pH value may be adjusted by using another acidic or alkaline compound as long as the characteristics of the metal pigment composition obtained according to the present invention are not impaired.

When a basic hydrolysis catalyst is used as the hydrolysis catalyst, the pH value is preferably set to 7 to 11, and particularly preferably set to 7.5 to 10. When the pH value is 7 or more, the silicon compound-containing layer can be quickly formed. On the other hand, when the pH value is 11 or less, flocculation of the metal particles and a decrease in brightness can be suppressed, and generation of hydrogen gas due to corrosion can be prevented.

When an acidic hydrolysis catalyst is used as the hydrolysis catalyst, the pH value is preferably set to 1.5 to 4, and particularly preferably set to 2 to 3. When the pH value is 1.5 or more, the reaction is properly controlled, and it becomes

easy to obtain a metal pigment composition containing desired composite particles. On the other hand, when the pH value is 4 or less, the precipitation rate of the silicon compound-containing layer can be kept high.

In the step (2), a mixed coordination type heteropolyanion compound may be added in order to form the second coating layer (typically, a molybdenum-containing coating film).

A mixed coordination type heteropolyanion of the mixed coordination type heteropolyanion compound that can be used has a structure in which some of the poly atoms of the heteropolyanion made of one element are replaced with other elements, and exhibits physical properties different from those of a mixture of the respective heteropolyanions.

When the mixed coordination type heteropolyanion is expressed by a chemical formula of $[X_pM_qN_rO_s]^t$, the heteropolyanion is expressed by $[X_pM_qO_s]^t$, which is further distinguished from isopolyanion $[M_qO_s]^t$. However, X as a heteroatom represents an element of group IIIB, IVB, or VB such as B, Si, Ge, P, or As, and among them, B, Si, or P is preferable. M and N, which are poly atoms, represent transition metals such as Ti, Zr, V, Nb, Ta, Mo, and W; and Ti, Zr, V, Nb, Mo, and W are preferable.

In addition, p, q, r, and s represent the numbers of atoms, and t represents the oxidation number.

Since the heteropolyanion compound has many structures, the mixed coordination type heteropolyanion compound can have even more structures. Examples of the representative and preferred mixed coordination type heteropolyanion compound include the following mixed coordination type heteropolyacids: $H_3PW_xMo_{12-x}O_{40}•nH_2O$ (phosphotungstic molybdic acid•n-hydrate), $H_{3+x}PV_xMo_{12-x}O_{40}•nH_2O$ (phosphorus vanadomolybdic acid•n-hydrate), $H_4SiW_xMo_{12-x}O_{40}•nH_2O$ (silica tungsten molybdic acid•n-hydrate), and $H_{4+x}SiV_xMo_{12-x}O_{40}•nH_2O$ (silica vanadomolybdic acid•n-hydrate). (wherein, $1 \le x \le 11$, $n \ge 0$)

Among these heteropolyanion compounds, preferred specific examples include mixed coordination type heteropolyacids such as $H_3PW_3Mo_9O_{40}\cdot nH_2O$, $H_3PW_6Mo_6O_{40}\cdot nH_2O$, $H_3PW_9Mo_3O_{40}\cdot nH_2O$, $H_4PV_1Mo_{11}O_{40}\cdot nH_2O$, $H_6PV_3Mo_9O_{40}\cdot nH_2O$, $H_4SiW_3Mo_9O_{40}\cdot nH_2O$, $H_4SiW_6Mo_6O_{40}\cdot nH_2O$, $H_4SiW_9Mo_3O_{40}\cdot nH_2O$, $H_5SiV_1Mo_{11}O_{40}\cdot nH_2O$, and $H_7SiV_3Mo_9O_{40}\cdot nH_2O$.

(wherein, $n \ge 0$)

The mixed coordination type heteropolyanion compound may be used in the form of an acid (so-called mixed coordination type heteropoly acid), or may be used in the form of a (partial or complete) salt having a specific cation as a counter ion.

Examples of a counter cation source, when the mixed coordination type heteropolyanion compound is used in the form of a salt having a specific cation as a counter ion, include at least one selected from: inorganic components including alkali metals such as lithium, sodium, potassium, rubidium, and cesium, alkaline earth metals such as magnesium, calcium, strontium, and barium, metals such as manganese, iron, cobalt, nickel, copper, zinc, silver, cadmium, lead, and aluminum, and ammonia; and an amine compound that is an organic component. Among the inorganic components, salts of alkali metals, alkaline earth metals, and ammonia are preferable.

Furthermore, when at least one selected from these alkali metals, alkaline earth metals, and ammonia is used as a counter cation source, it is more preferable to use the counter cation source in the form of a salt with at least one selected from $H_3PW_xMo_{12-x}O_{40}•nH_2O$ (phosphotungstic molybdic acid•n-hydrate), $H_{3+x}PV_xMo_{12-x}O_{40}•nH_2O$ (phosphorus vanadomolybdic acid•n-hydrate), $H_4SiW_xMo_{12-x}O_{40}•nH_2O$ (silica tungsten molybdic acid•n-hydrate), and $H_{4+x}SiV_xMo_{12-x}O_{40}•nH_2O$ (silica vanadomolybdic acid•n-hydrate).

In addition, an amine compound that is an organic component is also preferably used as a counter cation source for the mixed coordination type heteropolyanion compound, and as a specific example, an amine compound represented by the following general formula (5) is preferable.

$$(R^8\text{-}N(\text{-}R^{10})_n\text{-}R^9 \cdots \qquad (5)$$

(wherein, $R^8$, $R^9$ and $R^{10}$ may be the same or different and are a hydrogen atom or a monovalent or divalent hydrocarbon group having 1 to 30 carbon atoms and optionally containing an ether bond, an ester bond, a hydroxyl group, a carbonyl group, or a thiol group; $R^8$ and $R^9$ may optionally form together a 5- or 6-membered cycloalkyl group, or form a 5- or 6-membered ring that can additionally contain a nitrogen or oxygen atom as a crosslinking member; or $R^8$, $R^9$, and $R^{10}$ may optionally form together a multi-membered multiple ring that can contain one or more additional nitrogen and/or oxygen atoms as crosslinking members. $R^8$, $R^9$, and $R^{10}$ do not simultaneously become a hydrogen atom. n represents an integer of 1 to 2.)

Specific examples of the amine compound as a counter cation source for the mixed coordination type heteropolyanion compound include linear primary amines such as ethylamine, propylamine, butylamine, hexylamine, octylamine, laurylamine, tridecylamine, and stearylamine; branched primary amines such as isopropylamine, isobutylamine, 2-ethylhexylamine, and branched tridecylamine; linear secondary amines such as dimethylamine, diethylamine, dipropylamine, dibutylamine, dihexylamine, dioctylamine, dilaurylamine, ditridecylamine, and distearylamine; branched

secondary amines such as diisopropylamine, diisobutylamine, di-2-ethylhexylamine, and di-branched tridecylamine; asymmetric secondary amines such as N-methylbutylamine, N-ethylbutylamine, N-ethylhexylamine, N-ethyllaurylamine, N-ethylstearylamine, N-isopropyloctylamine, and N-isobutyl-2-ethylhexylamine; linear tertiary amines such as trimethylamine, triethylamine, tripropylamine, tributylamine, trioctylamine, trilaurylamine, tritridecylamine, and tristearylamine; branched tertiary amines such as triisopropylamine, triisobutylamine, tri-2-ethylhexylamine, and tri-branched tridecylamine; tertiary amines having a mixed hydrocarbon group such as N,N-dimethyloctylamine, N,N-dimethyllaurylamine, N,N-dimethylstearylamine, and N,N-diethyllaurylamine; amines having an alkenyl group such as allylamine, diallylamine, triallylamine, and N,N-dimethylallylamine; and alicyclic primary amines such as cyclohexylamine and 2-methylcyclohexylamine; primary amines having an aromatic ring substituent such as aniline, benzylamine, and 4-methylbenzylamine; alicyclic secondary amines such as N,N-dicyclohexylamine and N,N-di-2-methylcyclohexylamine; secondary amines having an aromatic ring substituent such as dibenzylamine and N,N-di-4-methylbenzylamine; asymmetric secondary amines such as N-cyclohexyl-2-ethylhexylamine, N-cyclohexylbenzylamine, N-stearylbenzylamine, and N-2-ethylhexylbenzylamine; alicyclic tertiary amines such as N,N-dimethylbenzylamine, N,N-dimethylcyclohexylamine, and tricyclohexylamine; tertiary amines having an aromatic ring substituent such as tribenzylamine and tri-4-methylbenzylamine; amines having an ether bond such as morpholine, 3-methoxypropylamine, 3-ethoxypropylamine, 3-butoxypropylamine, 3-decyloxypropylamine, and 3-lauryloxypropylamine; alkanol amines such as monoethanolamine, diethanolamine, monoisopropanolamine, monopropanolamine, butanolamine, triethanolamine, N,N-dimethylethanolamine, N-methylethanolamine, N-methyldiethanolamine, N-ethylethanolamine, N-propylethanolamine, N-isopropylethanolamine, N-butylethanolamine, N-cyclohexyl-N-methylaminoethanol, N-benzyl-N-propylaminoethanol, or N-hydroxyethylpyrrolidine, N-hydroxyethylpiperazine, and N-hydroxyethylmorpholine; diamines such as ethylenediamine, N-methylethylenediamine, N,N'-dimethylethylenediamine, N,N,N',N'-tetramethylethylenediamine, 1,2-propanediamine, 1,3-propanediamine, N,N-dimethyl-1,3-propanediamine, N-cyclohexyl-1,3-propanediamine, N-decyl-1,3-propanediamine, and N-isotridecyl-1,3-propanediamine; cyclic amines such as N,N'-dimethylpiperazine, N-methoxyphenylpiperazine, N-methylpiperidine, N-ethylpiperidine, quinuclidine, diazabicyclo[2,2,2]octane, and 1,8-diazabicyclo[5,4,0]-7-undecene; and aromatic amines such as pyridine and quinoline, or any mixture thereof.

Among these amine compounds, preferred specific examples include at least one selected from linear or branched alkyl primary, secondary, or tertiary amines having 4 to 20 carbon atoms, or alkanolamines, and include, for example, butylamine, hexylamine, cyclohexylamine, octylamine, tridecylamine, stearylamine, dihexylamine, di-2-ethylhexylamine, linear or branched ditridecylamine, distearylamine, tributylamine, trioctylamine, linear or branched tritridecylamine, tristearylamine, N,N-dimethylethanolamine, N-methyldiethanolamine, triethanolamine, and morpholine.

It is more preferable to use the amine compound in the form of a salt of at least one selected from the amine compounds represented by the general formula (5) and at least one selected from $H_3PW_xMo_{12-x}O_{40}$•$nH_2O$ (phosphotungstic molybdic acid•n-hydrate), $H_{3+x}PV_xMo_{12-x}O_{40}$•$nH_2O$ (phosphorus vanadomolybdic acid•n-hydrate), $H_4SiW_xMo_{12-x}O_{40}$•$nH_2O$ (silica tungsten molybdic acid•n-hydrate), and $H_{4+x}SiV_xMo_{12-x}O_{40}$•$nH_2O$ (silica vanadomolybdic acid•n-hydrate).

Among the above mixed coordination type heteropolyanion compounds, mixed coordination type heteropoly acids of $H_3PW_xMo_{12-x}O_{40}$•$nH_2O$ (phosphotungstic molybdic acid•n-hydrate), $H_{3+x}PV_xMo_{12-x}O_{40}$•$nH_2O$ (phosphorus vanadomolybdic acid•n-hydrate), and $H_4SiW_xMo_{12-x}O_{40}$•$nH_2O$ (silica tungsten molybdic acid•n-hydrate), or organic amine salts of these mixed coordination type heteropoly acids are most preferable.

In the step (2), when external circulation is preferably performed in which a part of the dispersion (e.g., 0.5 to 30% by mass of the entire dispersion per 1 minute, preferably 1 to 20% by mass, and more preferably 1 to 15% by mass) is once extracted to the outside of the reactor and then returned to the reactor again, unevenness of the reaction treatment can be reduced.

In the step (2), it is also preferable to wash a liquid contact portion between the reactor and the mixed liquid after the silicon-containing raw material and the above-described optional component are added. The washing can be performed by showering the mixed liquid or solvent circulated outside at the vicinity of the liquid contact portion and/or by raising the liquid level. When deposits, which are attached to the vicinity of the liquid contact portion of the reactor, and stagnant matters, (containing unreacted raw material, formed composite particles, the catalyst, the solvent, or the like), are returned to the mixed liquid by the washing, unevenness of the reaction treatment can be reduced.

Step (3)

The step (3) is a step of recovering the composite particles formed in the step (2) by performing filtration/ washing.

After the step (2) is finished, the obtained composite particles can be recovered in the step (3). In the step (3), the silicon compound, the catalyst, the water, and other additives, which are not attached to the composite particles contained in the mixed liquid obtained in the step (2), are removed, and the solvent content can be adjusted to be desired for the final product. Therefore, the composite particles may be filtered/washed, and if necessary, a solvent may be added.

A known method can be used for the filtration, and for example, a pressure filtration apparatus to be usually used

industrially, such as a rotary press or a filter press; a vacuum filtration apparatus, such as a Nutsche filter or a Moore filter; or the like can be used. At the time of the filtration, washing may be performed by adding a solvent or water to the filtered substance, or may be performed by repeating work to disperse the obtained filtered substance in the solvent again for filtration.

Thereafter, the cake containing the composite particles may be subjected to a heat treatment at a temperature in the range of, for example, 100 to 500°C as necessary. The composite particles recovered in this way can usually form a metal pigment composition in which a small amount of solvent, containing water/hydrophilic solvent used in the manufacturing process, remains and is entrained.

The step (3) is desirably performed promptly after the step (2) is finished (i.e., after the stirring is finished). When the reaction liquid is left to stand after the stirring is finished, sedimentation and flocculation of the composite particles in the reaction liquid proceed, and thus the steps (2) and (3) are preferably performed continuously. Here, "continuously" includes a case where the mixed liquid obtained in the step (2) is once transferred to a vessel or the like, but the time before the next step (3) is performed is preferably within 24 hours, more preferably within 6 hours, and even more preferably within 3 hours.

The average particle size ($D_{50}$) of the composite particles contained in the resulting metal pigment composition is preferably 1.3 times or less the average particle size ($D_{50}$) of the metal particles as a raw material. When the average particle size is suppressed to 1.3 times or less the average particle size ($D_{50}$) of the metal particles as a raw material, the flocculation property of individual particles is suppressed to be small and a uniform silicon compound-containing layer and the like are easily obtained, and thus gas generation in an aqueous coating material can be suppressed and good storage stability can be easily obtained. In addition, a coating film formed by using the metal pigment composition can exhibit high hiding power and brightness feeling and the like, and the flocculation property of individual particles can be suppressed to be small. This ratio is more preferably 1.2 times or less, and particularly preferably 1.1 times or less.

The metal pigment composition manufactured by the present invention can be used for organic solvent-based coating materials, inks, and the like. In addition, when added to an aqueous coating material or aqueous ink in which resins, which are coating film-forming components (binders), are dissolved or dispersed in a medium mainly containing water, this metal pigment composition can form a metallic aqueous coating material or metallic aqueous ink, which is a resin composition. The metal pigment composition can also be kneaded with a resin or the like to be used as a water-resistant binder or filler. The antioxidant, the light stabilizer, the polymerization inhibitor, and the surfactant may be added when the metal pigment composition is blended in an aqueous coating material, an aqueous ink, a resin, or the like. As a modification, it is also possible to obtain a molded body from a kneaded product of the metal pigment composition and a resin or the like.

When the metal pigment composition is used for a coating material or an ink, the metal pigment composition may be added as it is to a (aqueous) coating material or a (aqueous) ink, but it is preferable to add the metal pigment composition after being dispersed in a solvent in advance. Examples of the solvent to be used include water, texanol, diethylene glycol monobutyl ether, and propylene glycol monomethyl ether. Examples of these resins include acrylic resins, polyester resins, polyether resins, epoxy resins, fluororesins, and rosin resins. Examples of the binder of the coating material or the ink include rubber in addition to the resin. These resins are preferably emulsified, dispersed, or dissolved in water. Therefore, carboxyl groups, sulfone groups, and the like contained in the resins can be neutralized.

Preferred resins are acrylic resins and polyester resins. If necessary, a resin, such as a melamine-based curing agent, an isocyanate-based curing agent, or a urethane dispersion, can be used in combination. Furthermore, it may be combined with a coloring pigment such as an inorganic pigment, an organic pigment, or an extender pigment that is generally added to a coating material, a silane coupling agent, a titanium coupling agent, a dispersant, an anti-settling agent, a leveling agent, a thickener, or an antifoaming agent. A surfactant may further be added in order to improve the dispersibility in the coating material, or an antioxidant, a light stabilizer, and a polymerization inhibitor may further be added in order to improve the storage stability of the coating material.

Examples of the coloring pigment include phthalocyanine, quinacridone, isoindolinone, perylene, azo lake, iron oxide, chrome yellow, carbon black, titanium oxide, and pearl mica.

The content of the metal pigment composition manufactured according to the present invention in the aqueous coating material or aqueous ink (resin composition) is not limited, but may usually be set to 0.1 to 50% by mass, and is particularly preferably set to 1 to 30% by mass. When the content is 0.1% by mass or more, a high decorative (metallic) effect can be obtained. In addition, when the content is 50% by mass or less, it is possible to prevent the characteristics of the aqueous coating material or aqueous ink, for example, weather resistance, corrosion resistance, mechanical strength, and the like from being impaired.

The content of the solvent is not particularly limited, but may be 20 to 200% by mass with respect to the binder content. When the content of the solvent is within this range, the viscosity of the coating material or ink is adjusted to an appropriate range, and handling and film formation can be facilitated.

A coating method or a printing method of an aqueous coating material or the like is not particularly limited. For example, various coating methods or printing methods can be appropriately adopted in consideration of the form of an

aqueous coating material or the like, the surface shape of a material to be coated, and the like. Examples of the coating method include a spray method, a roll coater method, a brush coating method, and a doctor blade method. Examples of the printing method include gravure printing and screen printing.

The coating film formed by an aqueous coating material or the like may be formed on an undercoat layer or an intermediate coat layer by electrodeposition coating or the like. If necessary, a topcoat layer or the like may be formed on a coating film formed by an aqueous coating material or the like.

In the case of these layer configurations, each coating film layer is coated and cured or dried, and then the next coating film layer may be coated; alternatively, each coating film layer is coated by so-called wet-on-wet coating, and then, with the layer uncured or undried, the next coating film layer may be coated. For the aqueous coating material or the like containing the metal pigment composition, it is preferable from the viewpoint of obtaining a coating film having good mirror-like brightness to adopt a method including the step of, after an underlayer coating film layer is coated and cured or dried, forming a coating film layer by the aqueous coating material or the like. The method for curing the coating composition in each coating film layer may be thermal curing or normal temperature curing. The method for drying the coating composition in each coating film layer may be, for example, drying using hot air or natural drying at room temperature.

The thickness of the coating film layer formed by the aqueous coating material or the like is not particularly limited, but may usually be about 2 to 100 μm. When the thickness of the coating film layer is 2 μm or more, an effect of hiding the base by an ink or coating material can be sufficiently obtained. In addition, when the thickness of the coating film layer is 100 μm or less, drying is facilitated, and occurrence of a defect, such as foaming or sagging, can be suppressed.

## EXAMPLES

Hereinafter, the present invention will be described more specifically by way of examples, but it should be noted that these examples are merely illustrative.

### Example 29

27 kg of a commercially available aluminum paste (manufactured by Asahi Kasei Corporation, product name: "GX-3100 (average particle size, $D_{50}$: 11.3 μm, nonvolatile content: 74%)") and 93 kg of methoxypropanol (hereinafter, abbreviated as "PM") were added to a reaction apparatus including a reactor having a diameter of 0.5 m and a volume of 200 L and a paddle blade having a blade diameter (maximum diameter) of 0.3 m (the shortest distance between the inner surface of the reactor and the tip of the stirring blade: 0.1 m), the mixture was stirred with the rotation speed of the stirring blade set to 100 rpm and the tip speed set to 1.6 m/sec, and the aluminum paste was uniformly dispersed in the PM for 1 hour. At this time, the average particle size, $D_{50}$, of the metal particles in the dispersion was 13.8 μm.

Next, a liquid, in which 0.2 kg of phosphotungstic molybdic acid ($H_3PW_6Mo_6O_{40}$) hydrate was dissolved in 1 kg of methoxypropanol, was gradually added thereto, and the mixture was stirred for 1 hour while the temperature of the slurry was maintained at 40°C.

Thereafter, 2 kg of tetraethoxysilane was added as an organosilicon compound, then 2 kg of 25% aqueous ammonia and 40 kg of purified water were added for 30 minutes, and then the mixture was further stirred for 1 hour.

Thereafter, 0.25 kg of methyltrimethoxysilane was further added as a silane coupling agent, and the mixture was stirred for 1 hour. After the reaction was finished, the reaction mixture was cooled before the particles settled down or were flocculated, and then the slurry was washed and filtered to obtain an aluminum pigment composition having a nonvolatile content of 60%.

In these reactions, the bottom surface was tapered to not form an abnormal stagnation portion.

### Example 30

27 kg of a commercially available aluminum paste (manufactured by Asahi Kasei Corporation, product name: "GX-3100 (average particle size: 11.3 μm, nonvolatile content: 74%)") and 93 kg of methoxypropanol (hereinafter, abbreviated as "PM") were added to a reaction apparatus including a reactor having a diameter of 0.5 m and a volume of 200 L and a paddle blade having a blade diameter (maximum diameter) of 0.3 m (the shortest distance between the inner surface of the reactor and the tip of the stirring blade: 0.1 m), the mixture was stirred with the rotation speed of the stirring blade set to 100 rpm and the tip speed set to 1.6 m/sec, and while external circulation, in which 2 L/min of the dispersion that had been extracted from the bottom was returned to the reactor at an upper portion of the reactor, was performed, the aluminum paste was uniformly dispersed in the PM for 5 hours. At this time, the average particle size of the metal particles in the dispersion was 11.8 μm.

Next, a liquid, in which 0.2 kg of phosphotungstic molybdic acid ($H_3PW_6Mo_6O_{40}$) hydrate was dissolved in 1 kg of methoxypropanol, was gradually added thereto, and the mixture was stirred for 1 hour while the temperature of the slurry was maintained at 40°C.

Thereafter, 2 kg of tetraethoxysilane was added as an organosilicon compound, then 2 kg of 25% aqueous ammonia and 40 kg of purified water were added for 1 hour, and then the mixture was further stirred for 2 hours. During these total of 3 hours, 10 kg of PM was added while being showered at the liquid contact portion of the reactor, and while the liquid contact portion was washed by also raising the liquid level simultaneously, the reaction was performed.
Thereafter, 0.25 kg of methyltrimethoxysilane was further added as a silane coupling agent, and the mixture was stirred for 2 hours. After the reaction was finished, the reaction mixture was cooled before the particles settled down or were flocculated, and then the slurry was washed and filtered to obtain an aluminum pigment composition having a nonvolatile content of 60%. During the reaction, the external circulation was continued.
In these reactions, the bottom surface was tapered to not form an abnormal stagnation portion, and the liquid was circulated in which the liquid was extracted from an extraction pipe at the bottom and returned to reactor at an upper portion of the reactor. A circulation pipe was also formed in such a way that, in order to prevent abnormal stagnation from occurring, there was no steep change in diameter by eliminating a protrusion on the inner surface.

Example 31

An aluminum pigment composition having a nonvolatile content of 60% was obtained in the same manner as in Example 30 except that the addition time of 25% aqueous ammonia and purified water was changed to 30 minutes and the subsequent stirring time was changed to 1 hour.

Example 32

An aluminum pigment composition having a nonvolatile content of 60% was obtained in the same manner as in Example 30 except that ultrasonic waves of 500 W were applied for a retention time of about 1 minute in the middle of the flow path for the external circulation.

Example 33

An aluminum pigment composition having a nonvolatile content of 60% was obtained in the same manner as in Example 30 except that the stirring blade was changed to one having a diameter of 0.12 m, and the mixture was stirred with the rotation speed of the stirring blade set to 500 rpm and the tip speed set to 3.1 m/sec.

Example 34

An aluminum pigment composition having a nonvolatile content of 60% was obtained in the same manner as in Example 30 except that the reaction was performed without showering of the PM at the liquid contact portion of the reactor and without simultaneous raising of the liquid level.

Example 35

An aluminum pigment composition having a nonvolatile content of 60% was obtained in the same manner as in Example 30 except that the paste was changed to an aluminum paste (manufactured by Asahi Kasei Corporation, product name "GX 40A (average particle size 19.8 μm, volatile content 74%").

Example 36

An aluminum pigment composition having a nonvolatile content of 60% was obtained in the same manner as in Example 30 except that the paste was changed to an aluminum paste (manufactured by Asahi Kasei Corporation, product name "FD 5090 (average particle size 9 μm, volatile content 75%").

Example 37

An aluminum pigment composition having a nonvolatile content of 60% was obtained in the same manner as in Example 30 except that a reaction apparatus including a reactor having a diameter of 1.2 m and a volume of 3,000 L and a paddle blade having a blade diameter of 0.6 m was used, the raw materials and the like were each 15 times, the rotation speed of the stirring blade was set to 100 rpm, and the tip speed was set to 3.1 m/sec.

Comparative Example 3

An aluminum pigment composition having a nonvolatile content of 60% was obtained in the same manner as in Example 30 except that the reaction, in which the organosilicon compound and the silane coupling agent were added, was not performed.

Example 38

An aluminum pigment composition having a nonvolatile content of 60% was obtained in the same manner as in Example 29 except that the stirring blade was changed to one having a maximum diameter of 0.09 m, and the mixture was stirred with the rotation speed of the stirring blade set to 200 rpm and the tip speed set to 0.9 m/sec.

Example 39

An aluminum pigment composition having a nonvolatile content of 60% was obtained in the same manner as in Example 29 except that the mixture was stirred with the rotation speed of the stirring blade set to 1,500 rpm and the tip speed set to 24 m/sec.

Example 40

An aluminum pigment composition having a nonvolatile content of 60% was obtained in the same manner as in Example 29 except that the stirring blade was changed to one having a maximum diameter of 0.49 m (i.e., the shortest distance between the inner surface of the reactor and the tip of the stirring blade was changed to 5 mm), and the tip speed was changed to 2.6 m/sec.

Example 41

An aluminum pigment composition having a nonvolatile content of 60% was obtained in the same manner as in Example 29 except that the mixture was stirred with the rotation speed of the stirring blade set to 25 rpm and the tip speed set to 0.4 m/sec.

Example 42

27 kg of a commercially available aluminum paste (manufactured by Asahi Kasei Corporation, product name: "GX-3100 (average particle size: 11.3 μm, nonvolatile content: 74%)") and 93 kg of methoxypropanol (hereinafter, abbreviated as "PM") were added to a reaction apparatus including a reactor having a diameter of 0.5 m and a volume of 200 L and a paddle blade having a blade diameter (maximum diameter) of 0.3 m (the shortest distance between the inner surface of the reactor and the tip of the stirring blade: 0.1 m), the mixture was stirred with the rotation speed of the stirring blade set to 100 rpm and the tip speed set to 1.6 m/sec, and while external circulation, in which 2 L/min of the dispersion that had been extracted from the bottom was returned to the reactor at an upper portion of the reactor, was performed, the aluminum paste was uniformly dispersed in the PM for 5 hours. At this time, the average particle size of the metal particles in the dispersion was 11.8 μm.

Next, a liquid, in which 0.2 kg of phosphotungstic molybdic acid ($H_3PW_6Mo_6O_{40}$) hydrate was dissolved in 1 kg of methoxypropanol, was gradually added thereto, and the mixture was stirred for 1 hour while the temperature of the slurry was maintained at 40°C.

Thereafter, 2 kg of tetraethoxysilane was added as an organosilicon compound, then 0.1 kg of 25% aqueous ammonia and 30 kg of purified water were added for 1 hour, and then the mixture was further stirred for 2 hours. Thereafter, the temperature was raised to 50°C, and 0.4 kg of 25% aqueous ammonia and 20 kg of purified water were added for 2 hours. During these total of 5 hours, 10 kg of PM was added while being showered at the liquid contact portion of the reactor, and while the liquid contact portion was washed by also raising the liquid level simultaneously, the reaction was performed.

Thereafter, 0.25 kg of methyltrimethoxysilane was further added as a silane coupling agent, and the mixture was stirred for 2 hours. After the reaction was finished, the reaction mixture was cooled before the particles settled down or were flocculated, and then the slurry was washed and filtered to obtain an aluminum pigment composition having a nonvolatile content of 60%. During the reaction, the external circulation was continued.

In these reactions, the bottom surface was tapered to not form an abnormal stagnation portion, and the liquid was circulated in which the liquid was extracted from an extraction pipe at the bottom and returned to reactor at an upper portion of the reactor. A circulation pipe was also formed in such a way that, in order to prevent abnormal stagnation from occurring,

there was no steep change in diameter by eliminating a protrusion on the inner surface.

Example 43

An aluminum pigment composition having a nonvolatile content of 60% was obtained in the same manner as in Example 42 except that a reaction apparatus including a reactor having a diameter of 1.2 m and a volume of 3,000 L and a paddle blade having a blade diameter of 0.6 m was used, the raw materials and the like were each 15 times, the rotation speed of the stirring blade was set to 100 rpm, and the tip speed was set to 3.1 m/sec.

Example 44

An aluminum pigment composition having a nonvolatile content of 60% was obtained in the same manner as in Example 42 except that the paste was changed to an aluminum paste (manufactured by Asahi Kasei Corporation, product name: "FD 5090 (average particle size: 9 μm, nonvolatile content: 75%").

Example 45

An aluminum pigment composition having a nonvolatile content of 60% was obtained in the same manner as in Example 42 except that an aluminum paste, having an average particle size, D50, of 10 μm, a particle thickness of 60 nm, and a nonvolatile content of 75%, was used.

Measurement of average particle size

The average particle sizes, $D_{50}$ based on volume, of the metal particles in the dispersion and the composite particles contained in the obtained aluminum pigment composition were measured using a laser diffraction particle size distribution meter "LA -300" (manufactured by HORIBA, Ltd.). Isopropanol was used as a measurement solvent, and a metal pigment composition containing the composite particles as a sample was subjected to ultrasonic dispersion for 2 minutes as a pretreatment, then the mixture was put into a reactor, and after it was confirmed that an appropriate concentration was obtained, the average particle size, $D_{50}$, was measured.

Preparation of aqueous metallic coating material

After the following components were mixed, the pH was adjusted from 7.7 to 7.8 with dimethylethanolamine, and the viscosity was adjusted from 650 to 750 mPa · s (B-type viscometer, No. 3 low, rotated 60 times, measured at 25°C) with a carboxylic acid-based thickener and purified water to prepare an aqueous metallic coating material.

- Aluminum pigment composition: 12.0 g in terms of nonvolatile content
- Methoxypropanol: 18.0 g
- Polyoxyethylene lauryl ether (nonionic surfactant) (manufactured by Matsumoto Yushi-Seiyaku Co., Ltd., Actinol L5): 6.0 g
- Purified water: 12.0 g
- Water-soluble acrylic resin (manufactured by Mitsui Chemicals, Inc., ALMATEX WA 911): 110.0 g
- Melamine resin (manufactured by Nippon Cytec Industries, Inc., CYMEL 350): 18.0 g

Evaluation 1: Evaluation of coating material stability

For the aqueous metallic coating material prepared according to the above formulation, a change in condition after being left to stand at 23°C for 24 hours was visually evaluated.

O: No particular change was observed.
△: Flocculation of aluminum pigment was slightly observed.
×: Flocculation of aluminum pigment was observed.

Evaluation 2: Storage stability (gas generation) evaluation

200 g of the prepared aqueous metallic coating material was collected in a flask, and a cumulative amount of generated hydrogen gas was observed in a constant-temperature water bath at 60°C for up to 24 hours. The amount of generated gas was evaluated as follows and used as an index of the storage stability in a coating material.

⊙: less than 2 mL
○: 2 mL or more and less than 5 mL
△: 5 mL or more and less than 20 mL
×: 20 mL or more

Evaluation 3: Evaluation of luminance

The prepared aqueous metallic coating material was applied to an intermediately coated 12 cm × 6 cm steel plate by air spray coating so as to have a dry film thickness of 4 μm, and predried at 90°C for 10 minutes. Thereafter, the organic solvent type top coat coating material was applied by air spray coating so as to have a dry film thickness of 20 μm, and dried at 140°C for 30 minutes to prepare a coated plate, which was subjected to evaluation of luminance.

The organic solvent type topcoat coating material was prepared as follows: the following components were mixed and dispersed with a spatula for 3 to 4 minutes; and then the viscosity of the coating material was adjusted to 20.0 seconds with a Ford Cup No. 4.

- Acrylic clear resin (manufactured by DIC Corporation, A 345): 420 g
- Melamine resin (manufactured by DIC Corporation, L-117-60): 165 g
- Aromatic solvent (manufactured by EXXON Chemical Co., Ltd., Solvesso 100): 228 g

The luminance of the coating film was evaluated using a laser type metallic feeling measuring apparatus "ALCOPE LMR-200" manufactured by Kansai Paint Co., Ltd. As an optical condition, a laser light source is provided at an incident angle of 45 degrees, and optical receivers at light receiving angles of 0 degrees and -35 degrees. As a measurement value, an IV value was obtained at a light receiving angle of -35 degrees at which the maximum light intensity was obtained except for, among laser reflected light, the light in a mirror reflection area that reflected on the surface of the coating film. The IV value is a parameter proportional to the intensity of regularly reflected light from the coating film, and indicates the magnitude of light luminance. The determination method is as follows based on Comparative Example 1.

⊙: The decrease from the standard (Comparative Example 1) was less than 20.
○: The decrease from the standard (Comparative Example 1) was 20 or more and less than 40.
△: The decrease from the standard (Comparative Example 1) was 40 or more.
×: The decrease from the standard (Comparative Example 1) was 40 or more.

Evaluation 4: Evaluation of hiding property

The prepared aqueous metallic coating material was applied onto a polyethylene terephthalate sheet (PET sheet) with a 2 mil applicator so as to have a dry film thickness of 15 μm, and a coating film dried at 140°C for 30 minutes was visually observed, and a hiding property was determined as follows based on Comparative Example 1.

⊙: the same level as the standard (Comparative Example 1)
○: From the same level as the standard (Comparative Example 1) to slightly lower level
△: Lower than the standard (Comparative Example 1)
×: Significantly lower than the standard (Comparative Example 1)

Evaluation 5: Evaluation of flocculation/deformation of composite particles

The prepared aqueous metallic coating material was applied onto a polyethylene terephthalate film (PET film) with a 9 mil applicator, left to stand at room temperature for 20 minutes, and then baked at 140°C for 20 minutes to prepare a coated plate. The coated plate was divided into pieces each having a size of 2 cm square with scissors, and then the cross section of the coating film was repeatedly cut using a large rotary microtome (manufactured by YAMATO KOHKI INDUSTRIAL CO., LTD./RV-240) to expose the cross section of the coating film, and then ion milling processing was performed using an ion milling apparatus (manufactured by JEOL Ltd./IB-09010CP) with a setting such that ion beam irradiation was possible up to a portion 20 μm away from the cross section of the coating film to prepare a test piece for cross-section observation. The test piece was observed by FE-SEM (manufactured by HITACHI/S-4700) to observe the degree of overlap between particles (presence or absence of flocculation or fixation) and the degree of deformation of particles (presence or absence of bending). In the observation, particles having a particle size in the range of 90% from the center, when a particle size distribution was measured, were targeted.

Evaluation 5-1: Evaluation of degree of overlap

The degree of overlap (presence or absence of flocculation or fixation) was observed and evaluated at a magnification of about 1,000 to 3,000 times. When the degree of overlap could not be determined at this magnification, the degree of overlap was evaluated by appropriately changing the magnification. In this observation method, observation was performed at a magnification of 30,000 times at the maximum. A plurality of fields of view were observed from the cross section of the same test piece, so that the number of the observed particles was 500 or more. Evaluation was made based on Comparative Example 1 as follows according to the number proportion of flocculated particles.

○: The proportion of flocculated particles was 5% or more and less than 10%.
△: The proportion of flocculated particles was 5% or more and less than 10%.
×: The proportion of flocculated particles was 20% or more.

Evaluation 5-2: Evaluation of degree of deformation

Similarly to Evaluation 5-1, the degree of deformation (presence or absence of bending) was observed and evaluated at a magnification of about 1,000 to 3,000 times. When the degree of deformation could not be determined at this magnification, the degree of deformation was evaluated by appropriately changing the magnification. In this observation method, observation was performed at a magnification of 30,000 times at the maximum. A plurality of fields of view were observed from the cross section of the same test piece, so that the number of the observed particles was 500 or more. For the presence or absence of deformation, a case where the shortest distance between both ends of a particle was 0.8 times or less the length of the particle was determined that there was deformation (bending), and evaluation was made based on Comparative Example 1 as follows according to the number proportion of deformed particles.

○: The proportion of deformed particles was less than 10%.
○: The proportion of deformed particles was 10% or more and less than 35%.
×: The proportion of deformed particles was 35% or more.

The reactor and manufacturing conditions, the conditions of the metal particles used, and the results of the evaluation tests in each of Examples and Comparative Example are shown in Table 4.

[Table 4]

Table 4

| | | Example 29 | Example 30 | Example 31 | Example 32 | Example 33 | Example 34 | Example 35 | Example 36 | Example 37 | Comparative Example 3 | Example 38 | Example 39 | Example 40 | Example 41 | Example 42 | Example 43 | Example 44 | Example 45 |
|---|---|---|---|---|---|---|---|---|---|---|---|---|---|---|---|---|---|---|---|
| Reactor and manufacturing conditions | Reactor volume (L) | 200 | 200 | 200 | 200 | 200 | 200 | 200 | 200 | 3000 | 200 | 200 | 200 | 200 | 200 | 200 | 3000 | 200 | 200 |
| | Reactor diameter (m) | 0.5 | 0.5 | 0.5 | 0.5 | 0.5 | 0.5 | 0.5 | 0.5 | 1.2 | 0.5 | 0.5 | 0.5 | 0.5 | 0.5 | 0.5 | 1.2 | 0.5 | 0.5 |
| | Stirring blade diameter (m) | 0.3 | 0.3 | 0.3 | 0.3 | 0.12 | 0.3 | 0.3 | 0.3 | 0.6 | 0.3 | 0.09 | 0.3 | 0.49 | 0.3 | 0.3 | 0.6 | 0.3 | 0.3 |
| | Tip speed (m/s) | 1.6 | 1.6 | 1.6 | 1.6 | 3.1 | 1.6 | 1.6 | 1.6 | 3.1 | 1.6 | 0.9 | 23.6 | 2.6 | 0.4 | 1.6 | 3.1 | 1.6 | 1.6 |
| | External circulation | × | ○ | ○ | ○ | ○ | ○ | ○ | ○ | ○ | ○ | × | × | × | × | ○ | ○ | ○ | ○ |
| | Ultrasonic treatment | × | × | × | ○ | × | × | × | × | × | × | × | × | × | × | ○ | ○ | ○ | ○ |
| | Liquid contact portion washing | × | ○ | ○ | ○ | ○ | × | ○ | ○ | ○ | × | × | × | × | × | ○ | ○ | ○ | ○ |
| | Reaction time (h) | 3 | 3 | 1.5 | 3 | 3 | 3 | 3 | 3 | 3 | — | 3 | 3 | 3 | 3 | 3+2 | 3+2 | 3+2 | 3+2 |
| Metal particle conditions | Raw material (aluminum flake product name) | GX 3100 | GX 3100 | GX 3100 | GX 3100 | GX 3100 | GX 3100 | GX 40A | FD 5090 | GX 3100 | GX 3100 | GX 3100 | GX 3100 | GX 3100 | GX 3100 | GX 3100 | GX 3100 | FD 5090 | (SB10) |
| | Average particle size of raw material (μm) | 11.3 | 11.3 | 11.3 | 11.3 | 11.3 | 11.3 | 19.8 | 9.0 | 11.3 | 11.3 | 11.3 | 11.3 | 11.3 | 11.3 | 11 | 11 | 9 | 10 |
| | Average particle size in dispersant (μm) | 13.8 | 11.8 | 11.8 | 11.5 | 13.6 | 11.9 | 20.5 | 9.5 | 12.0 | 11.8 | 16.5 | 13.5 | 11.9 | 16.8 | 12 | 12 | 10 | 11 |
| | Average particle size of metal pigment composition (μm) | 14.9 | 12.2 | 12.2 | 11.8 | 14.8 | 12.3 | 20.7 | 9.7 | 12.3 | 12.1 | 18.5 | 14.5 | 12.3 | 19.5 | 12 | 12 | 10 | 11 |
| Evaluation tests results | Evaluation 1: Coating material stability evaluation | ◎ | ◎ | ◎ | ◎ | ◎ | ◎ | ◎ | ◎ | ◎ | × | ◎ | ◎ | ◎ | ◎ | ◎ | ◎ | ◎ | ◎ |
| | Evaluation 2: Storage stability (gas generation) evaluation | △ | ◎ | ○ | ◎ | ○ | △ | ◎ | ◎ | ◎ | × | × | △ | △ | × | ○ | ○ | ○ | ○ |
| | Evaluation 3: Luminance evaluation | △ | ○ | ○ | ◎ | △ | ○ | ◎ | ◎ | ◎ | — | × | × | × | × | ○ | ○ | ○ | ○ |
| | Evaluation 4: Hiding property evaluation | △ | ◎ | ○ | ◎ | △ | ○ | ◎ | ◎ | ◎ | — | × | △ | × | × | ○ | ○ | ○ | ○ |
| | Evaluation 5-1: Degree of overlap evaluation | △ | ○ | ○ | ◎ | △ | △ | ○ | ○ | ○ | — | × | △ | ○ | × | ◎ | ◎ | ◎ | ◎ |
| | Evaluation 5-2: Degree of deformation evaluation | ◎ | ◎ | ◎ | ◎ | △ | ○ | ○ | ○ | ○ | — | ○ | × | × | ○ | ◎ | ◎ | ◎ | ◎ |

In the table, the manufacturing conditions are indicated by "○" in the case of being implemented and "×" in the case of not being implemented.

The metal pigment compositions obtained in Examples 29 to 37 and 42 to 45 had good stability as a coating material and good storage stability (less gas generation), and was excellent in coating film color tones, such as luminance and hiding property, and further excellent in the degree of overlap (presence or absence of flocculation/fixation) and the degree of deformation (presence or absence of bending). This is considered to be because the initial dispersion of the aluminum flakes was sufficiently performed and stirring conditions in which the aluminum flakes were not damaged and flocculation at the time of the condensation of the organosilicon compound was suppressed were adopted, the silica resin layer was firmly attached to the surfaces of the aluminum particles.

INDUSTRIAL APPLICABILITY

The composite metal pigment obtained according to the method of the present invention and a coating film and the like obtained by using the composite metal pigment combine excellent designability and gloss, suppression of seeds, stability in an aqueous coating material, and the like at high levels beyond the limits of the conventional techniques, so that they can be suitably used in various applications in which metal pigments are conventionally used, such as coating materials, inks, and resin kneading agents; more specifically, automobile bodies, automobile repairing materials, automobile parts, home electric appliances, plastic parts, PCM coating materials, high weather-resistant coating materials, heat-resistant coating materials, anticorrosive coating materials, ship bottom coating materials, offset printing inks, gravure printing inks, screen printing inks, and the like, and hence they have high applicability in various fields of industries including transportation machine industries such as automobiles, electrical and electronic industries such as home electric appliances, coating material industry, printing industry, and the like.

## Claims

**1.** A method for manufacturing a metal pigment, using a stirring vessel-type reaction apparatus and comprising following steps (1) to (3):

(1) dispersing metal particles in a solvent;
(2) coating the metal particles with a silicon compound; and
(3) filtering and washing the metal particles, wherein

the stirring vessel-type reaction apparatus has:

a reactor having a volume of 100 L or more; and
the ratio of the maximum diameter of a stirring blade to the diameter of the reactor is in a range of 0.2 to 1.0, and the shortest distance between an inner surface of the reactor and a tip of the stirring blade is 10 mm or more; and
the tip speed of the stirring blade, while being stirred, is 1 to 20 m/s.

**2.** The manufacturing method according to claim 1, wherein:

in the step (1), the average particle size of the metal particles in a dispersion is 1.2 times or less the average particle size of the metal particles as a raw material, and the metal particles in the dispersion are uniformly dispersed in the solvent;
in the step (2), stirring is performed to not form a stagnation portion in a surface layer and a bottom; and
the average particle size of composite particles contained in the metal pigment obtained after the step (3) is 1.3 times or less the average particle size of the metal particles as a raw material.

**3.** The manufacturing method according to claim 1 or 2, wherein in the step (1) and/or (2), a treatment liquid extracted from a vicinity of the bottom of the reactor is returned to the reactor at an upper portion of the reactor for circulation.

**4.** The manufacturing method according to any one of claims 1 to 3, wherein in the step (2), after a silicon-containing raw material and a catalyst are put in, an inner wall of the reactor near a liquid contact portion between the reactor and a mixed liquid is washed with a reaction liquid or the solvent to reduce deposits or stagnant matters.

**5.** The manufacturing method according to any one of claims 1 to 4, wherein the step (2) is performed for 2 hours or more.

6. The manufacturing method according to any one of claims 1 to 5, wherein the manufactured metal pigment comprises composite particles having metal particles and one or more coating layers formed on surfaces of the metal particle, wherein

(1) the composite particles have a flaky shape, and
(2) $D_{50}$ based on volume is 0.1 to 30 μm when a particle size distribution of the composite particles is measured by a laser diffraction type particle size distribution meter.

7. The manufacturing method according to 6, wherein the metal particles contain aluminum or an aluminum alloy.

8. The manufacturing method according to claim 6 or 7, wherein the one or more coating layers include a silicon compound-containing layer.

9. The manufacturing method according to any one of claims 6 to 8, wherein at least one layer of the coating layers is a polysiloxane layer.

10. The manufacturing method according to any one of claims 6 to 9, wherein the composite particles have an average aspect ratio of 15 to 500.

11. The manufacturing method according to any one of claims 1 to 10, wherein a stirring state reflected by a stirring Re number, is 3,000 or more, wherein the stirring Re number is calculated by the following equation:

$$\text{Stirring Re number} = (\rho \times n \times d^2)/\mu$$

wherein, ρ indicates the density (kg/m$^3$) of a mixed liquid to be stirred at 25°C, n indicates a stirring rotation speed (rps), d indicates a stirring blade diameter (m), and μ indicates the viscosity (Pa·s) of a mixed liquid to be stirred at 25°C.

12. A stirring vessel-type reaction apparatus used in the manufacturing method according to any one of claims 1 to 11, wherein the stirring vessel-type reaction apparatus has:

a reactor having a volume of 100 L or more; and
the ratio of the maximum diameter of a stirring blade to the diameter of the reactor is in a range of 0.2 to 1.0, and the shortest distance between an inner surface of the reactor and a tip of the stirring blade is 10 mm or more.

Europäisches Patentamt
European Patent Office
Office européen des brevets

# EUROPEAN SEARCH REPORT

Application Number
EP 26 17 4088

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 604 453 A1 (TOYO ALUMINIUM KK [JP]) 5 February 2020 (2020-02-05) * paragraph [0116] - paragraph [0120]; example 1 * | 1-12 | INV. B32B27/20 C09C1/62 C09C3/00 C09C3/06 C09C3/08 C09C3/10 C09C3/12 C09D5/00 C09D201/00 C09D11/00 C09D7/62 C09C1/64 C09D7/40 C09D11/037 |
| X | JP H09 309918 A (TOKUYAMA CORP) 2 December 1997 (1997-12-02) * paragraphs [0037],[0040]; example 1 and comparative example 1; figure 1 * | 12 | |
| A | US 2008/087187 A1 (MAUL ROBERT [DE] ET AL) 17 April 2008 (2008-04-17) * paragraph [0120] - paragraph [0121]; claims 22-31; example 1 * | 1-12 | |
| A | ZHANG CHUANMIN ET AL: "In-situ encapsulation of flaky aluminum pigment with poly(methylhydrosiloxane) anti-corrosion film for high-performance waterborne coatings", JOURNAL OF INDUSTRIAL AND ENGINEERING CHEMISTRY, THE KOREAN SOCIETY OF INDUSTRIAL AND ENGINEERING CHEMISTRY, KOREA, [Online] vol. 89, 2 June 2020 (2020-06-02), pages 239-249, XP086224906, ISSN: 1226-086X, DOI: 10.1016/J.JIEC.2020.05.020 Retrieved from the Internet: URL:https://www.sciencedirect.com/science/article/pii/S1226086X20302355> [retrieved on 2026-07-22] * Experimental: preparation of encapsulated flaky aluminum pigment * | 1-12 | TECHNICAL FIELDS SEARCHED (IPC): C09C |

The present search report has been drawn up for all claims

1

| Place of search | Date of completion of the search | Examiner |
|---|---|---|
| The Hague | 23 July 2026 | Herrera Ramirez, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 26 17 4088

This annex lists the patent family members relating to the patent documents cited in the above-mentioned European search report. The members are as contained in the European Patent Office EDP file on The European Patent Office is in no way liable for these particulars which are merely given for the purpose of information.

23-07-2026

| Patent document cited in search report | Publication date | Patent family member(s) | Publication date |
|---|---|---|---|
| EP 3604453 A1 | 05-02-2020 | CN 110494505 A | 22-11-2019 |
| | | EP 3604453 A1 | 05-02-2020 |
| | | EP 3978574 A1 | 06-04-2022 |
| | | JP 7653597 B2 | 31-03-2025 |
| | | JP 2018172617 A | 08-11-2018 |
| | | JP 2021105183 A | 26-07-2021 |
| | | KR 20190135002 A | 05-12-2019 |
| | | US 2020131374 A1 | 30-04-2020 |
| | | US 2021189143 A1 | 24-06-2021 |
| | | WO 2018180936 A1 | 04-10-2018 |
| JP H09309918 A | 02-12-1997 | NONE | |
| US 2008087187 A1 | 17-04-2008 | AT E407983 T1 | 15-09-2008 |
| | | CA 2568298 A1 | 15-12-2005 |
| | | CN 1997711 A | 11-07-2007 |
| | | DE 102004026955 A1 | 29-12-2005 |
| | | EP 1756234 A1 | 28-02-2007 |
| | | ES 2314666 T3 | 16-03-2009 |
| | | JP 2008501050 A | 17-01-2008 |
| | | MX 265494 B | 30-03-2009 |
| | | US 2008087187 A1 | 17-04-2008 |
| | | WO 2005118722 A1 | 15-12-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003147226 A
- WO 2004096921 A
- WO 2018180936 A
- JP 2018172617 A
- JP 2013518948 A
- JP 5979788 B
- JP 2019151678 A
- JP 4633239 B